# EUROPEAN PATENT APPLICATION

(11) **EP 1 562 361 A1**
(43) Date of publication of application: **10.08.2005**
(21) Application number: 05250610.2
(22) Date of filing: 03.02.2005
(51) Int. Cl.: H04N 1/00

(54) **Mobile terminal, printing processing method, and printing processing program**

(30) Priority: 09.02.2004 JP 2004031604
(71) Applicant: Fuji Photo Film Co., Ltd., Tokyo (JP)
(72) Inventor: Kiyohiro, Ito c/o Fuji Photo Film Co, Ltd, Minato-ku Tokyo (JP); Matsumoto, Koji c/o Fuji Photo Film Co Ltd, Minato-ku Tokyo (JP)
(74) Representative: Stevens, Jason Paul

(57) **Abstract**

A burden on a user operating a mobile terminal can be reduced for causing image data to become printable. An image 31 represented by image data obtained by photography or reception of an e-mail message is displayed on a liquid crystal display monitor 13 of a mobile phone together with a Print button 33 for printing processing that causes the image data to become printable. When a user selects the Print button 33, a printing processing menu is displayed for sending the image data to a DPE store providing a network printing service or to an output apparatus such as a printer having an infrared port, for example. When the user selects a desired type of printing processing, the selected printing processing is carried out. In this manner, the user can cause the image data representing the image 31 to become printable with less complex operation.

## Description

### BACKGROUND OF THE INVENTION

### Field of the Invention

The present invention relates to a mobile terminal such as a camera-embedded mobile phone having imaging means and communication means for sending and receiving image data via e-mail messages or the like. More specifically, the present invention relates to a mobile terminal appropriate for printing processing of image data, to a printing processing method used in the mobile terminal, and to a printing processing program for causing a computer to execute the printing processing method.

### Description of the Related Art

Following the spread of camera-embedded mobile phones having digital cameras for obtaining image data by photography, image data obtained by photography have been displayed routinely on liquid crystal display monitors thereof and sent to friends by being attached to e-mail messages. In addition, a method has been proposed for processing image data obtained by photography or received via e-mail messages (see Japanese Unexamined Patent Publication No. 2003-258712), whereby the image data can be processed.

A digital camera of such a camera-embedded mobile phone is made on the premise that image data are displayed on a liquid crystal display monitor thereof whose size is much smaller than a monitor of a personal computer. Furthermore, a speed of data communication was slow in the case of sending and receiving image data as attachment to an e-mail message. Therefore, the number of pixels in the image data was small.

However, following sophistication of a camera of a camera-embedded mobile phone and increasing speed of data communication, mega-pixel image data can be photographed and sent and received as an attachment to an e-mail message. As the number of pixels in image data increases, an image of high quality, which is sufficient for printing, can be reproduced. Therefore, image data obtained by photography or by receiving an e-mail message are stored in a memory card usable on a mobile phone, and brought to a DPE store for placing a printing order from the DPE store. In addition, such image data can be printed by a printer with use of a personal computer.

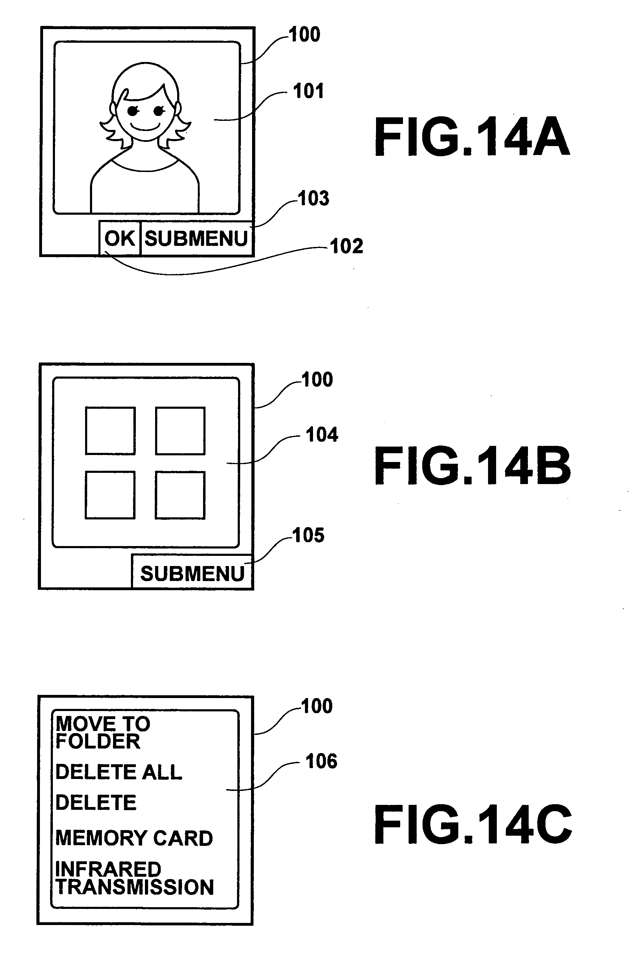

In the case where a camera-embedded mobile phone obtains image data by photography or receives image data via an e-mail message, an image 101 represented by the image data is displayed on a liquid crystal display monitor 100, as shown in Figure 14A. At this time, an OK button 102 is displayed on the liquid crystal display monitor 100 together with the image 101 represented by the image data, for storing the image 101 in an image folder in an internal memory of the mobile phone. A submenu button 103 is also displayed, for display of a submenu screen including commands for deleting the image data or for setting details of storage of the image data. When a user of the mobile phone selects the OK button 102 by using input means such as ten keys or a scroll and select key, the image data are stored in the image folder of the internal memory.

Meanwhile, in the case where the user wishes to print the image data, the user operates the mobile phone to display a main menu on the liquid crystal display monitor 100, and selects a command for accessing the image folder from the main menu. As shown in Figure 14B, the user then displays on the liquid crystal display monitor 100 a catalog 104 of images represented by image data stored in the image folder. A submenu button 105 is also displayed on the liquid crystal display monitor 100, for display of a submenu screen including commands for carrying out various kinds of processing on the image data stored in the image folder, together with the catalog 104.

The user selects the image data to be stored in a memory card, by using the catalog 104. When the user further selects the submenu button 105 after the selection, a submenu screen 106 for processing the selected image data is displayed as shown in Figure 14C. The user then selects a desired one of the commands, for storage of the image data in the memory card from the submenu screen 106. In this manner, the image data are stored in the memory card.

By using the memory card having the image data, the user can place a printing order from a DPE store or can print the image data by using a printer at home. If the user selects infrared communication in the submenu screen 106 shown in Figure 14C, printing can be carried out by directly sending the image data to an output apparatus such as a personal computer and a printer having an infrared port or a printing apparatus having an infrared port installed in a DPE store.

Display of the menu or the submenu described above can be carried out by executing application software pre-installed in the mobile phone. Alternatively, application software for displaying a menu can also be downloaded and executed (see Japanese Unexamined Patent Publication No. 2003-223325).

However, in order to cause the image data obtained by photography or by reception of an e-mail message to become printable after the image data are stored in the memory card or the like, the user needs to operate the mobile phone in a substantially complex manner after photography or e-mail message reception, such as storage of the image data in the image folder, display of the main menu, selection of the command from the main menu for accessing the image folder, selection of the image data from the catalog, display of the submenu for processing the selected image data, and selection of the command from the submenu. Therefore, the user is heavily burdened by the complex manner of operation. Consequently, the user may not print the image data although the image data are of high quality appropriate for printing.

### SUMMARY OF THE INVENTION

The present invention has been conceived based on consideration of the above circumstances. An object of the present invention is therefore to reduce a burden on a user when the user causes image data obtained by photography to become printable in a mobile terminal such as a camera-embedded mobile phone having imaging means for obtaining the image data and communication means for sending and receiving the image data.

Amobile terminal of the present invention is a mobile terminal having imaging means for obtaining image data by photography, display means for carrying out various kinds of display, input means for carrying out various kinds of input, and communication means for sending and receiving various kinds of information including the image data. The mobile terminal of the present invention comprises:
image display control means for displaying on the display means an image represented by the image data obtained through the photography by the imaging means or reception thereof by the communication means, immediately after the photography or the reception;
printing menu display control means for displaying on the display means a printing menu for accepting printing processing that causes the image data to become printable, together with the image data; and
printing processing means for carrying out the printing processing on the image data when the printing menu is selected with use of the input means.

The printing processing refers to processing for causing the image data to become printable. More specifically, the printing processing refers to processing for storing the image data in a memory card usable on the mobile terminal, processing for sending the image data via infrared communication to an output apparatus having an infrared port such as a printer, a personal computer, or a printing apparatus in a DPE store, processing for placing a printing order by sending the image data to a print server in a DPE store that provides a network printing service, and processing for ordering delivery of a print or prints by sending the image data to a print server managed by a carrier of the mobile terminal, for example.

In the case where the printing processing comprises various kinds of processing, the printing menu is displayed in such a manner that a user of the mobile terminal of the present invention can select a desired one of the kinds of processing.

In the mobile terminal of the present invention, the printing menu may include the processing for placing a printing order from the DPE store providing the network printing service regarding the image data. In this case, when the processing for placing a printing order is selected, the printing processing means carries out processing for sending the image data to the print server of the DPE store, as the printing processing to be carried out by the printing processing means.

As the processing for sending the image data to the print server of the DPE store can be listed display on the display means a printing order screen for placing a printing order regarding the image data from the DPE store, and transmission of the image data to the print server by using the communication means based on an instruction from the printing order screen, for example. More specifically, the printing order screen includes items comprising reception of user authentication, specification of print size and quantity, and selection of a recipient store at which the user receives the print or prints.

A printing processing method of the present invention is a method of printing processing by a mobile terminal having imaging means for obtaining image data by photography, display means for carrying out various kinds of display, input means for carrying out various kinds of input, and communication means for sending and receiving various kinds of information including the image data, and the printing processing method comprises the steps of:
displaying on the display means an image represented by the image data obtained through the photography by the imaging means or reception thereof by the communication means, immediately after the photography or the reception;
displaying on the display means a printing menu for accepting printing processing that causes the image data to become printable, together with the image data;
receiving selection of the printing menu by using the input means; and
carrying out the printing processing on the image data after the selection of the printing menu.

The printing processing method of the present invention may be provided as a program for causing a computer to execute the printing processing method.

According to the present invention, the image represented by the image data obtained by photography or reception by the communication means is displayed on the display means, together with the printing menu for receiving selection of the printing processing that causes the image data to become printable. When the user of the mobile terminal carries out the selection from the printing menu, the printing processing is carried out on the image data. Therefore, the user can cause the image data to become printable immediately after the photography or the reception of the image data. Consequently, operation of the mobile terminal by the user for causing the image data to become printable becomes far less complex. As a result, the user can easily print the image data.

If the printing menu includes the processing for placing a printing order from a DPE store that carries out a network printing service, the user can easily place the printing order regarding the image data, by execution of the printing processing of sending the image data to the print server of the DPE store by the printing processing means. Therefore, the DPE store increases chances of receiving printing orders and can increase the profits thereof. In addition, the user can obtain the print or prints of high quality provided by the DPE store.

Note that the program of the present invention may be provided being recorded on a computer readable medium. Those who are skilled in the art would know that computer readable media are not limited to any specific type of device, and include, but are not limited to: floppy disks, CD's, RAM's, ROM's, hard disks, magnetic tapes, and internet downloads, in which computer instructions can be stored and/or transmitted. Transmission of the computer instructions through a network or through wireless transmission means is also within the scope of the present invention. Additionally, computer instructions include, but are not limited to: source, object, and executable code, and can be in any language, including higher level languages, assembly language, and machine language.

### BRIEF DESCRIPTION OF THE DRAWINGS

Figure 1 is a block diagram showing the configuration of a camera-embedded mobile phone of an embodiment of a mobile terminal of the present invention;
Figure 2 is a flow chart showing a procedure carried out in the embodiment;
Figure 3 shows how an image and a menu are displayed;
Figure 4 shows how a printing processing menu is displayed;
Figure 5 is a flow chart showing printing processing for "Store";
Figure 6 shows an authentication screen;
Figure 7 shows a printing order screen;
Figure 8 shows a recipient store selection screen;
Figure 9 is a flow chart showing printing processing for "Delivery";
Figure 10 shows how a Delivery Transmission button is displayed;
Figure 11 is a flow chart showing printing processing for "Infrared";
Figure 12 shows how an Infrared Transmission button is displayed;
Figure 13 shows another manner of display of the printing processing menu; and
Figures 14A to 14C show a conventional manner of operation for printing processing.

### DESCRIPTION OF THE PREFERRED EMBODIMENT

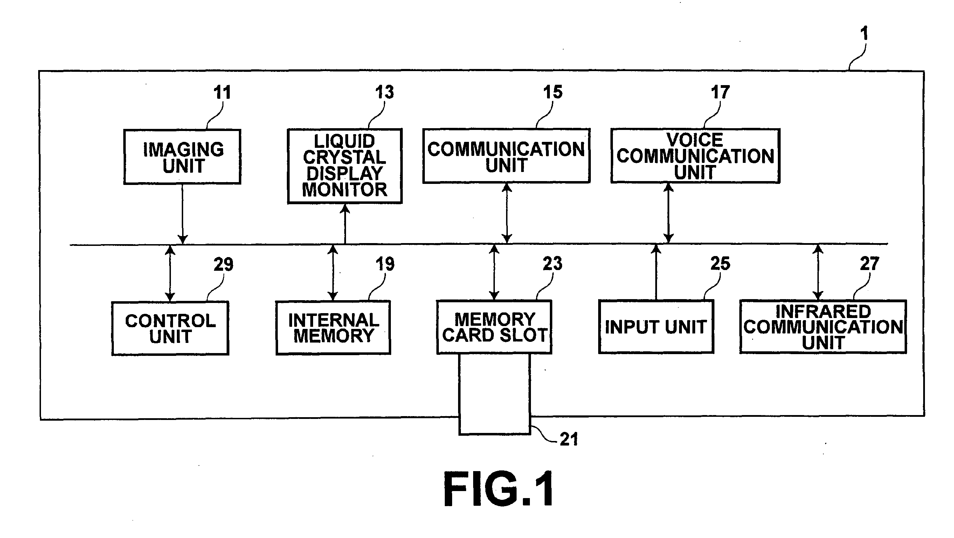

Hereinafter, an embodiment of the present invention will be explained with reference to the accompanying drawings. Figure 1 is a block diagram showing the configuration of a camera-embedded mobile phone of an embodiment of a mobile terminal of the present invention. As shown in Figure 1, a camera-embedded mobile phone 1 in this embodiment comprises an imaging unit 11 for obtaining image data representing an image by photography, a liquid crystal display monitor 13 for carrying out various kinds of display such as image data and a menu, a communication unit 15 for sending and receiving an e-mail message and for downloading various kinds of information such as image data, audio data, and application software via the Internet, a voice communication unit 17 for carrying out communication by voice via a mobile communication network, an internal memory 19 for storing the image data obtained by photography, image data received via an e-mail message, the various kinds of information that has been downloaded, and setting information for the camera-embedded mobile phone 1, a memory card slot 23 for storing the image data in a memory card 21, an input unit 25 comprising ten keys and a scroll and select key for carrying out various kinds of input, an infrared communication unit 27 for communicating with a device having an infrared port by infrared communication, and a control unit 29 (the image display control means, the printing menu display control means, and the printing processing means) for controlling the imaging unit 11, the liquid crystal display monitor 13, the communication unit 15, the voice communication unit 17, the memory card slot 23, and the infrared communication unit 27.

In this embodiment, the camera-embedded mobile phone 1 carries out printing processing for causing the image data obtained by the imaging unit 11 through photography or the image data received via the e-mail message to become printable according to operation of the mobile phone 1 by a user thereof. In this embodiment, the control unit 29 executes application software written in Java or the like, for displaying a menu for the printing processing and for displaying a screen for receiving various kinds of input that is necessary for the printing processing. The application software is stored in the internal memory 19 and can be updated to the newest version thereof by accessing a predetermined Web site. Instead of the application software in Java or the like, the printing processing can be carried out by application software that has been pre-installed in the camera-embedded mobile phone 1.

Reception of the image data via the e-mail message in this embodiment refers to reception of the image data attached to the e-mail message together with main text of the e-mail message, and to reception of the image data separately from the main text by accessing a URL in the case of reception of the e-mail message describing the URL in which the image data are stored.

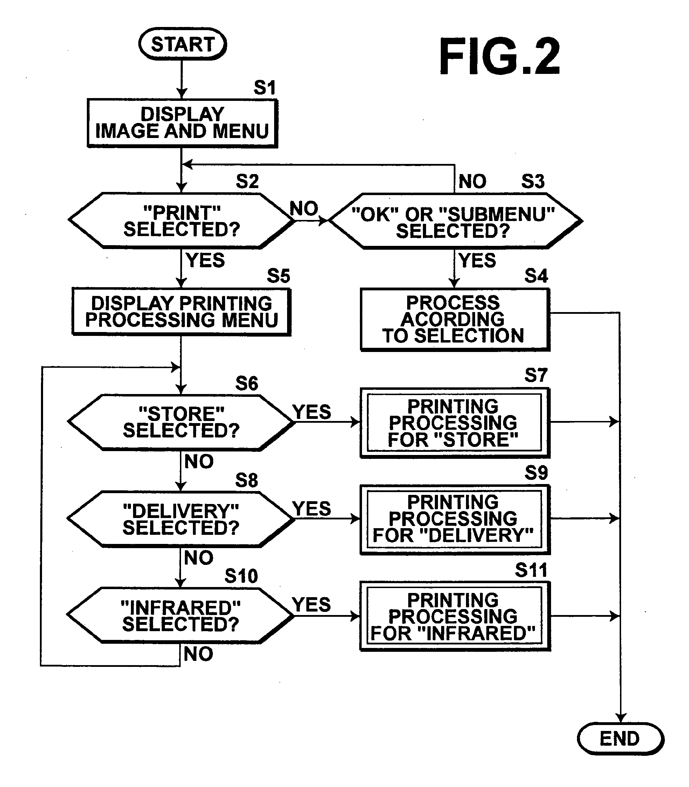

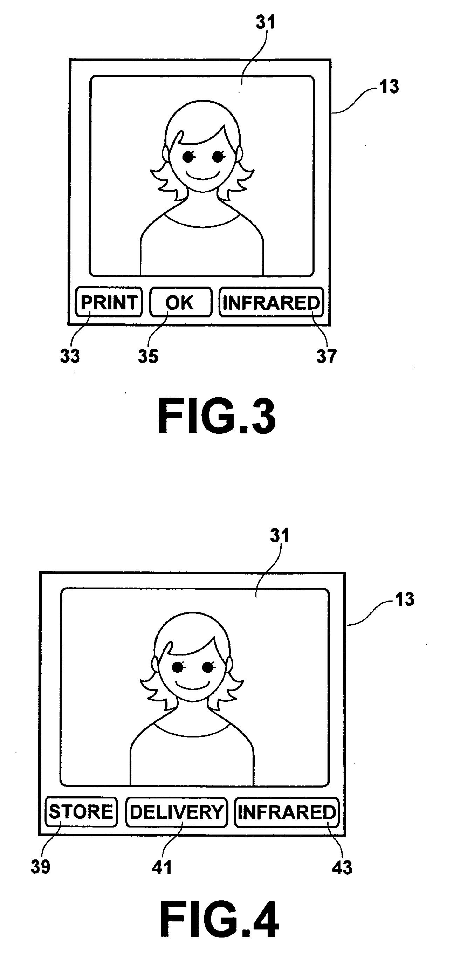

A procedure carried out in this embodiment will be explained next. Figure 2 is a flow chart showing the procedure. When the imaging unit 11 obtains the image data by photography or when the communication unit 15 receives the e-mail message attached with the image data, the control unit 29 starts the procedure. The image represented by the image data and a menu are displayed on the liquid crystal display monitor 13 (Step S1). Figure 3 shows how the image and the menu are displayed. As shown in Figure 3, an image 31 represented by the image data is displayed on the liquid crystal display monitor 13, together with a Print button 33, an OK button 35, and a submenu button 37.

The Print button 33 is a button for displaying a printing processing menu after selection thereof and for causing the control unit 29 to carry out the printing processing on the image data representing the image 31. The OK button 35 is a button for causing the control unit 29 to carry out processing for storing the image data representing the image 31 being displayed in an image folder in the internal memory 19. The submenu button 37 is a button for causing the control unit 29 to carry out processing for displaying on the liquid crystal display monitor 13 a submenu screen including various commands for deleting the image data and for setting how the image data are stored, for example.

The control unit 29 judges whether or not the user has selected the Print button 33 by using the input unit 25 (Step S2). If a result at Step S2 is negative, the control unit 29 judges whether the user has selected the OK button 35 or the submenu button 37 (Step S3). If a result at Step S3 is affirmative, the control unit 29 carries out the processing according to the selected button (Step S4) to end the procedure. More specifically, in the case where the user has selected the OK button 35, the control unit 29 stores the image data in the internal memory 19. In the case where the user has selected the submenu button 37, the control unit 29 displays the submenu screen on the liquid crystal display monitor 13, and carries out processing corresponding to one of the commands selected by the user in the submenu screen. If the result at Step S3 is negative, the procedure returns to Step S2.

If the result at Step S2 is affirmative, the control unit 29 displays the printing processing menu on the liquid crystal display monitor 13, instead of the Print button 33, the OK button 35, and the submenu button 37 (Step S5). Figure 4 shows the printing processing menu displayed on the liquid crystal display monitor 13. As shown in Figure 4, a Store button 39, a Delivery button 41, and an Infrared button 43 are displayed as the printing processing menu, together with the image 31 on the liquid crystal display monitor 13.

The Store button 39 is a button for causing the control unit 29 to carry out the printing processing for causing the image data representing the displayed image 31 to become printable, by placing a printing order from a DPE store providing a network printing service through transmission of the image data from the communication unit 15 to a print server of the DPE store. In this case, the print server of the DPE store prints the image data. The user receives a print or prints of the image data by visiting a recipient store which receives the print or prints for the user.

The Delivery button 41 is a button for causing the control unit 29 to carry out the printing processing for causing the image data to become printable by sending the image data representing the image 31 being displayed from the communication unit 15 to a print server managed by a carrier of the mobile phone 1. In this case, the print server of the carrier prints the image data. A print or prints of the image data are delivered to the user together with an itemized billing statement or the like.

The Infrared button 43 is a button for causing the control unit 29 to carry out the printing processing for causing the image data representing the image 31 being displayed to become printable by directly sending the image data from the infrared communication unit 27 to an output apparatus such as a personal computer and a printer having an infrared port or a printing apparatus having an infrared port installed in a DPE store. In this case, the output apparatus prints the image data.

The control unit 29 judges whether or nor the user has selected the Store button 39 (Step S6). If a result at Step S6 is affirmative, the control unit 29 carries out the printing processing corresponding to the Store button 39 (Step S7).

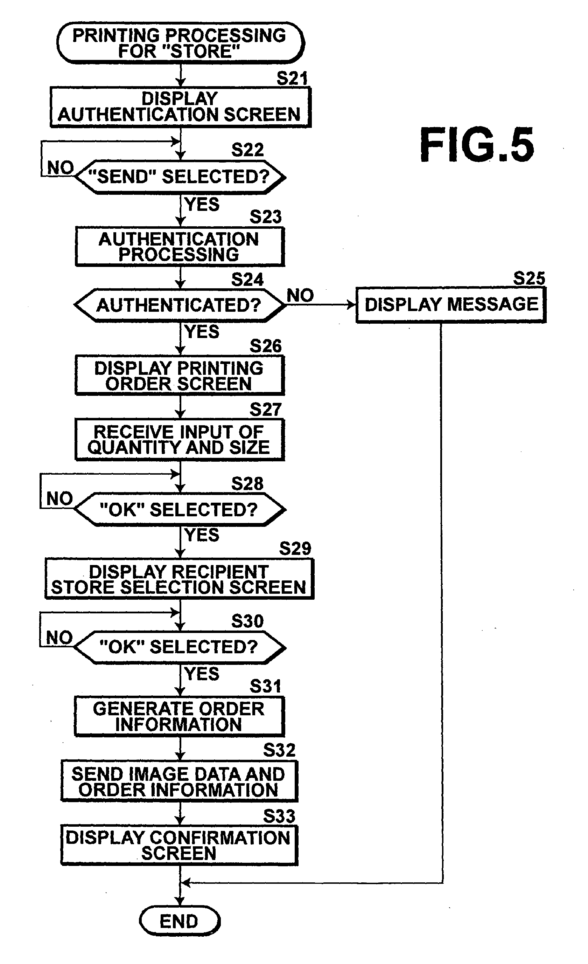

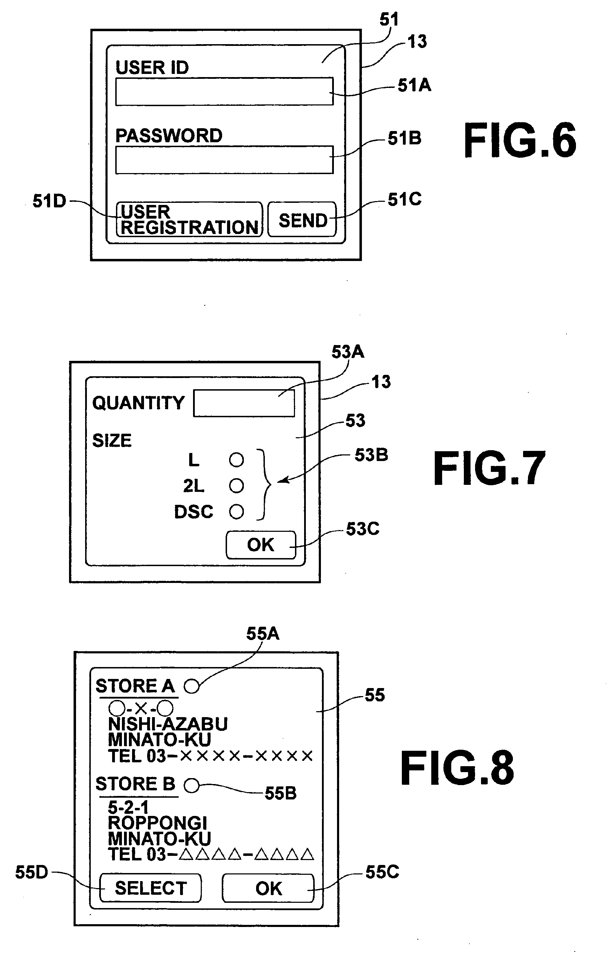

Figure 5 is a flow chart showing the printing processing corresponding to the Store button 39. The control unit 29 displays on the liquid crystal display monitor 13 a user authentication screen by using the application software stored in the internal memory 19 (Step S21). Figure 6 shows the authentication screen. As shown in Figure 6, an input field 51A for inputting a user ID, an input field 51B for inputting a password, and a Send button 51C for sending the user ID and the password to the print server of the DPE store are displayed in an authentication screen 51.

The user of the camera-embedded mobile phone 1 needs to carry out user registration with the DPE store and to obtain the user ID and the password in advance, in order to use the printing processing corresponding to the Store button 39. For a user whose user registration has not been completed, a User Registration button 51D is displayed in the authentication screen 51. When the user selects the User Registration button 51D, the control unit 29 displays on the liquid crystal display monitor 13 a screen for causing the user to input personal information necessary for the user registration, such as their name, their address, their phone number, and their e-mail address. The control unit 29 then receives input of the personal information by the user, and sends the personal information to the print server of the DPE store. The print server of the DPE store receives the personal information, and registers the user in order to issue the user ID and the password. The user ID and the password are sent to the camera-embedded mobile phone 1 of the user. In this manner, the printing processing corresponding to the Store button 39 can be used by the new user.

In the case where the user has placed a printing order by using the printing processing corresponding to the Store button 39, the user ID and the password may be displayed in the authentication screen 51 by default, in order to save the user from inputting the user ID and the password.

The control unit 29 starts monitoring on whether or not the user has selected the Send button 51C (Step S22). If a result at Step S22 is affirmative, authentication processing is carried out (Step S23). More specifically, the control unit 29 causes the print server to carry out user authentication by sending the user ID and the password thereto, and receives information on a result of the user authentication by the print server. Based on the information on the user authentication received from the print server, the control unit 29 judges whether or not the user has been authenticated (Step S24). If a result at Step S24 is negative, the control unit 29 displays a message such as "Not authenticated" on the liquid crystal display monitor 13 (Step S25) to end the procedure.

If the result at Step S24 is affirmative, the control unit 29 displays a printing order screen on the liquid crystal display monitor 13 by using the application software stored in the internal memory 19 (Step S26). Figure 7 shows the printing order screen. As shown in Figure 7, an input field 53A for inputting a quantity, buttons 53B for selecting a print size (such as L, 2L, and DSC sizes in this example), and an OK button 53C for confirming input are shown in a printing order screen 53.

The control unit 29 receives input of the quantity and the size by the user (Step S27). The control unit 29 then starts monitoring on whether or not the user has selected the OK button 53 (Step S28). If a result at Step S28 is affirmative, the control unit 29 displays on the liquid crystal display monitor 13 a recipient store selection screen for selecting the recipient store at which the user will receive the print or prints, by using the application software stored in the internal memory 19 (Step S29).

Figure 8 shows the recipient store selection screen. As shown in Figure 8, names, addresses, and phone numbers of stores close to the address of the user are displayed in a recipient store selection screen 55. The information on the stores displayed in the selection screen 55 is stored in the internal memory 19 of the camera-embedded mobile phone 1 in advance, through transmission of the information from the print server of the DPE store to the camera-embedded mobile phone 1 with reference to the address of the user input by the user at the time of the user registration. The control unit 29 displays the recipient store selection screen 55 by using the information of the stores stored in the internal memory 19.

In the case where the user placed a printing order by using the printing processing corresponding to the Store button 39, the information on the recipient store used in the past order may be displayed on the recipient store selection screen 55 by default.

Meanwhile, a mobile phone having a function of detecting a position thereof has been known. In such a mobile phone, information transmitted from the mobile phone is used for obtaining information on position of a base station of a mobile communication network. A mobile phone enabling detection of a position thereof by using a GPS function has also been known. Therefore, in the case where the camera-embedded mobile phone 1 has such a function described above, the mobile phone 1 may detect the position thereof and send the information on the position to the print server so that the print server can send to the mobile phone 1 the information on the store closest to the position. The information on the store is then displayed in the recipient store selection screen 55 after reception of the information from the print server.

In the recipient store selection screen 55 are displayed buttons 55A and 55B for selecting the recipient store, an OK button 55C for confirming the selected store, and a Select button 55D for carrying out store selection again.

If the user selects the Select button 55D, the control unit 29 displays a screen on the liquid crystal display monitor 13 for selection of the recipient store, based on the name of prefecture. The user can select a desired one of the stores from the screen.

The characters "Store A" and "Store B" shown in the recipient store selection screen 55 are hyperlinked. If the user selects the characters, the control unit 29 displays detailed information on the store selected by the user (such as business hours, a map showing where the store is located, a printing charge, and delivery time) on the liquid crystal display monitor 13. In this manner, the user can be notified of the detailed information. The detailed information may be displayed in the recipient store selection screen 55. The detailed information is stored in the internal memory 19 after being sent from the print server of the DPE store.

Some of the stores change their business hours or the content of services, and new stores open. Therefore, the information on the stores stored in the print server of the DPE store is updated daily. Consequently, the control unit 29 may regularly access the print server of the DPE store so that the newest information on the stores can be downloaded to the internal memory 19 and displayed in the recipient store selection screen 55.

The control unit 29 starts monitoring on whether or not the user has selected the OK button 55C after selection of the recipient store (Step S30). If a result at Step S30 is affirmative, the control unit 29 generates order information including the quantity, the size and the store information (Step S31). The control unit 29 sends the order information and the image data to the print server of the DPE store (Step S32).

The print server of the DPE store receives the image data and the order information, and sends confirmation information comprising the delivery time and reception number to the camera-embedded mobile phone 1. The camera-embedded mobile phone 1 displays the confirmation information as a confirmation screen on the liquid crystal display monitor 13 (Step S33) to end the procedure.

The print server of the DPE store prints the image data according to the print size and the quantity specified in the order information. The user can receive the print or prints of the image data by visiting the recipient store after the delivery time displayed in the confirmation screen.

If the result at Step S6 in Figure 2 is negative, the control unit 29 judges whether or not the user has selected the Delivery button 41 (Step S8). If a result at Step S8 is affirmative, the control unit 29 carries out the printing processing corresponding to the Delivery button 41 (Step S9).

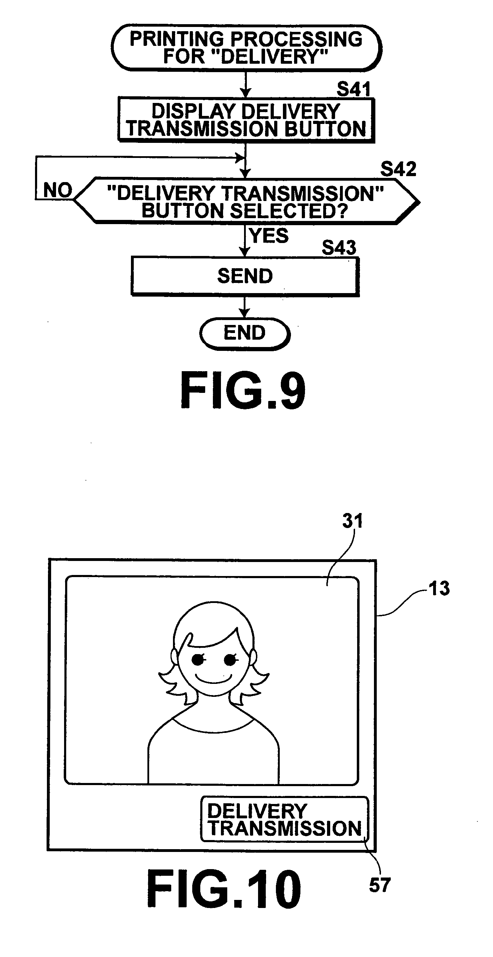

Figure 9 is a flow chart showing a procedure of the printing processing corresponding to the Delivery button 41. The control unit 29 displays a Delivery Transmission button 57 instead of the printing processing menu on the liquid crystal display monitor 13, by using the application software stored in the internal memory 19 (Step S41). Figure 10 shows the Delivery Transmission button 57 displayed on the liquid crystal display monitor 13. The control unit 29 starts monitoring on whether or not the user has selected the Delivery Transmission button 57 (Step S42). If a result at Step S42 is affirmative, the control unit 29 sends the image data to the print server managed by the carrier of the mobile phone 1 (Step S43) to end the procedure.

The print server managed by the carrier prints the image data after reception of the image data. The carrier delivers the print or prints of the image data to the user, together with the itemized billing statement. The user can receive the prints of the image data together with the statement sent monthly from the carrier.

If the result at Step S8 in Figure 2 is negative, the control unit 29 starts monitoring on whether or not the user has selected the Infrared button 43 (Step S10). If a result at Step S10 is affirmative, the control unit 29 carries out the printing processing corresponding to the Infrared button 43 (Step S11).

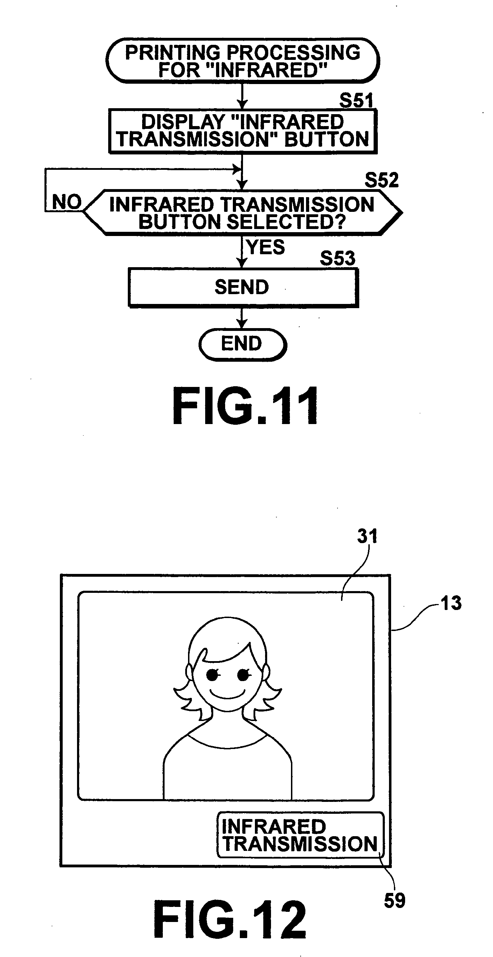

Figure 11 is a flow chart showing a procedure of the printing processing corresponding to the Infrared button 43. The control unit 29 displays an Infrared Transmission button 59 on the monitor 13, instead of the printing processing menu, by using the application software stored in the internal memory 19 (Step S51). Figure 11 shows the Infrared Transmission button 59 displayed on the liquid crystal display monitor 13. The control unit 29 starts monitoring on whether or not the user has selected the Infrared Transmission button 59 (Step S52) after the output apparatus such as the personal computer and the printer or a printing apparatus in a DPE store becomes ready for receiving the image data. If a result at Step S52 is affirmative, the control unit 29 sends the image data from the infrared communication unit 27 to the output apparatus by infrared communication (Step s53) to end the procedure.

The user can print the image data by using the output apparatus.

If the result at Step S10 is negative, the procedure returns to Step S6, and the procedure from Step S6 and later is repeated.

As has been described above, in this embodiment, the image 31 represented by the image data obtained by photography or via the e-mail message is displayed on the liquid crystal display monitor 13 together with the Print button 33. When the user selects the Print button 33, the printing processing menu comprising the Store button 39, the Delivery button 41, and the Infrared button 43 is displayed. When the user selects any one of the buttons in the printing processing menu, the printing processing in accordance with the selected button is carried out. Therefore, the user of the camera-embedded mobile phone 1 can cause the image data to become printable immediately after photography of the image data or reception of the image data. In this manner, the operation carried out by the user for causing the image data to become printable can be far less complex and a burden on the user can be reduced for the printing processing. As a result, the user can easily print the image data.

Furthermore, the printing processing menu displayed after selection of the Print button 33 includes the Store button 39 for placing a printing order from the DPE store providing the network printing service as the printing processing. Therefore, the user can easily place the printing order regarding the image data from the DPE store. In this manner, the DPE store can increase chances of order reception, resulting in an increased profit. The user is also benefited from obtaining the print or prints of high quality provided by the DPE store.

In the above embodiment, the printing processing menu comprising the Store button 39, the Delivery button 41, and the Infrared button 43 is displayed after selection of the Print button 33. However, the printing processing in accordance with any one of the buttons may be carried out immediately after selection of the Print button 33.

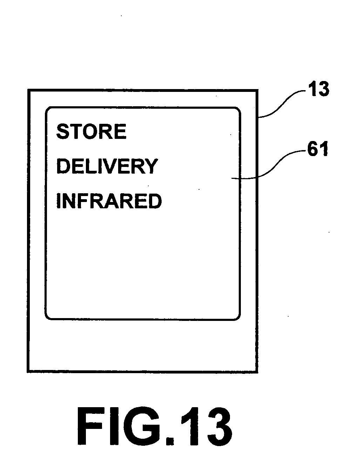

Moreover, any menu can be displayed as the printing processing menu, as long as the menu causes the image data to become printable. For example, if the image data are stored in the memory card 21, the image data can be printed by setting the memory card 21 on a personal computer or a printer or by bringing the memory card to a DPE store. Therefore, a button for storing the image data in the memory card 21 may be included in the printing processing menu. How the printing processing menu is displayed is not necessarily limited to the embodiment described above. For example, if the user selects the Print button 33, a printing processing menu 61 including commands for Store, Delivery, and Infrared (and storage in a memory card if necessary) may be displayed as shown in Figure 13.

## Claims

1. A mobile terminal having imaging means for obtaining image data by photography, display means for carrying out various kinds of display, input means for carrying out various kinds of input, and communication means for sending and receiving various kinds of information including the image data, the mobile terminal comprising:
image display control means for displaying on the display means an image represented by the image data obtained through the photography by the imaging means or reception thereof by the communication means, immediately after the photography or the reception;
printing menu display control means for displaying on the display means a printing menu for accepting printing processing causing the image data to become printable, together with the image data; and
printing processing means for carrying out the printing processing on the image data when the printing menu is selected with use of the input means.

2. The mobile terminal according to Claim 1, wherein the printing menu includes processing for placing a printing order from a DPE store providing a network printing service regarding the image data, and
the printing processing means carries out processing for sending the image data to a print server of the DPE store as the printing processing, in the case where the processing for placing a printing order is selected.

3. A printing processing method by a mobile terminal having imaging means for obtaining image data by photography, display means for carrying out various kinds of display, input means for carrying out various kinds of input, and communication means for sending and receiving various kinds of information including the image data, the printing processing method comprising the steps of:
displaying on the display means an image represented by the image data obtained through the photography by the imaging means or reception thereof by the communication means, immediately after the photography or the reception;
displaying on the display means a printing menu for accepting printing processing causing the image data to become printable, together with the image data;
receiving selection of the printing menu by using the input means; and
carrying out the printing processing on the image data after the selection of the printing menu.

4. A program for causing a computer to execute a printing processing method in a mobile terminal having imaging means for obtaining image data by photography, display means for carrying out various kinds of display, input means for carrying out various kinds of input, and communication means for sending and receiving various kinds of information including the image data, the program comprising the steps of:
displaying on the display means an image represented by the image data obtained through the photography by the imaging means or reception thereof by the communication means, immediately after the photography or the reception;
displaying on the display means a printing menu for accepting printing processing causing the image data to become printable, together with the image data;
receiving selection of the printing menu by using the input means; and
carrying out the printing processing on the image data after the selection of the printing menu.
